# EUROPEAN PATENT APPLICATION

(11) **EP 3 599 260 A1**
(43) Date of publication of application: **29.01.2020**
(21) Application number: 18186292.1
(22) Date of filing: 30.07.2018
(51) Int. Cl.: C09D 7/00

(54) **COATING AGENT CONTAINING NANO PARTICLE AND METHODS FOR THEIR PREPARATION**

(30) Priority: 27.07.2018 KR 20180087694
(71) Applicant: Dongwon Systems Corporation, Gyeonggi-do 13212 (KR)
(72) Inventor: IM, Kwang Bin, 17975 Gyeonggi-do (KR); CHOI, Jin Seok, 17850 Gyeonggi-do (KR); PARK, Woon Suk, 17870 Gyeonggi-do (KR)
(74) Representative: Patentwerk B.V.

(57) **Abstract**

A coating agent composition and a preparation method thereof are provided. The coating agent composition includes a nanocomposite including nanoclay minerals and a polymer, and a solvent.

## Description

### [TECHNICAL FIELD]

The following example embodiments relate to a coating agent including nanoparticles.

### [BACKGROUND ART]

Packaging materials used to pack articles need to maintain proper stability and quality so that articles may be stored until articles contained therein can be consumed. In a related art, polymer films have been used as packaging materials, because polymer films provide a barrier function against moisture and oxygen through a transparent barrier coating, and also ensure a visibility and provide an electromagnetic compatibility. As a polymer film, an ethylene vinyl alcohol copolymer (EVOH) layer film, or a polyvinylidene chloride (PVDC) film has been used. However, a barrier function of EVOH is greatly reduced in a high humidity environment, and PVDC has an issue of generation of dioxin during a disposal process. To replace the polymer film, a barrier layer based on metal oxide, such as aluminum oxide or silicon dioxide, has been used. However, such a metal oxide-based barrier layer is not economical due to a high manufacturing cost thereof and a complex manufacturing process thereof.

Thus, there is a demand for a coating agent that is easy to manufacture, eco-friendly, and capable of coating a large area of film.

Under the circumstances, the present inventors have discovered a coating agent composition having high barrier properties against oxygen and moisture by increasing a diffusion path of gas molecules through a nanocomposite, thereby completing the present invention.

### [DISCLOSURE OF THE INVENTION]

### [SUBJECT TO BE SOLVED]

An aspect of the present disclosure is to provide a coating agent composition including a nanocomposite formed by mixing nanoclay minerals and a polymeric material, and a preparation method thereof.

Another aspect of the present disclosure is to provide a coating agent composition that may perform a sufficient barrier function while ensuring a visibility of a package when the package is coated with the coating agent composition, and provide a preparation method thereof.

Another aspect is to provide a coating agent composition that may provide a barrier function against oxygen and moisture while having a relatively low cost compared to an area, and provide a preparation method thereof.

### [SOLUTION]

According to an aspect, there is provided a coating agent composition including a nanocomposite including nanoclay minerals and a polymer, and a solvent.

The nanoclay minerals may include plate-shaped nanoparticles with a size of 0.8 nanometers (nm) to 1.2 nm.

The nanoclay minerals may be bentonite, and the polymer may be poly(acrylic acid) (PAA).

A weight ratio of the nanoclay minerals and the polymer may range from 1 : 1: to 1: 2.

The nanocomposite may be included in an amount of 0.1 % by weight (wt %) to 20 wt % based on 100 wt % of the coating agent composition.

The nanocomposite may be included in an amount of 5 wt % to 10 wt % based on 100 wt % of the coating agent composition.

The coating agent composition may have an oxygen transmission rate (OTR) of 0.5 cc/m²·day to 10 cc/m²·day, and water vapor transmission rate (WVTR) of 10 g/m²·day to 20 g/m²·day.

The solvent may be at least one of deionized water, methanol, ethanol and butanol. According to another aspect, there is provided a method of preparing a coating agent composition, the method including mixing nanoclay minerals and a polymer in a solvent to prepare a mixed solution, dispersing the mixed solution so that the polymer is dispersed between the nanoclay minerals to prepare a dispersion solution in which a nanocomposite is formed, and centrifuging and purifying the dispersion solution to prepare a suspension.

The nanoclay minerals may be bentonite, and the polymer may be poly(acrylic acid) (PAA).

A weight ratio of the nanoclay minerals and the polymer may range from 1:1: to 1: 2 in the mixed solution.

The method may further include removing precipitates from the suspension to prepare a coating solution.

The nanocomposite may be included in an amount of 5 wt % to 10 wt % based on 100 wt % of the coating solution.

### [EFFECT OF THE INVENTION]

According to example embodiments of the present disclosure, a coating agent composition may function as a barrier to suppress penetration of oxygen and moisture by increasing a diffusion path of gas molecules that penetrate from external gas through a nanocomposite. Thus, the coating agent composition may be effectively used as a coating agent to coat a substrate for a package.

According to example embodiments of the present disclosure, a coating agent composition may include a nanocomposite formed by mixing clay particles and a polymer, and thus it is possible to simplify a manufacturing process and to reduce a manufacturing cost. In particular, a manufacturing cost compared to an area may be reduced, and thus the coating agent composition may be used for general purpose as a material of a package to pack an article.

The effects of the coating agent composition and the preparation method thereof according to the present disclosure are not limited to the aforementioned effects and other effects not mentioned above will be clearly understood by those skilled in the art from the following description.

### [BRIEF DESCRIPTION OF THE DRAWINGS]

These and/or other aspects, features, and advantages of the invention will become apparent and more readily appreciated from the following description of example embodiments, taken in conjunction with the accompanying drawings of which:
FIG. 1 is a diagram illustrating a process in which a nanocomposite is formed by mixing bentonite and poly(acrylic acid) (PAA) according to an example embodiment.
FIG. 2 is a diagram illustrating a process of coating a substrate with a coating agent composition according to an example embodiment.
FIG. 3 is a graph illustrating an analysis result of an X-ray diffraction (XRD) of bentonite that is a component of a nanocomposite according to an example embodiment.
FIG. 4 is a graph illustrating an XRD analysis result of a coating layer formed through the process of FIG. 2.
FIG. 5 illustrates field emission-scanning electron microscope (FE-SEM) images of the coating layer formed through the process of FIG. 2.

### [DETAILED DESCRIPTION TO CARRY OUT THE INVENTION]

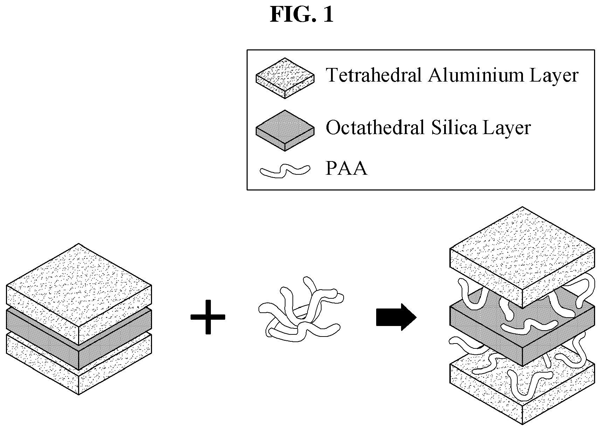

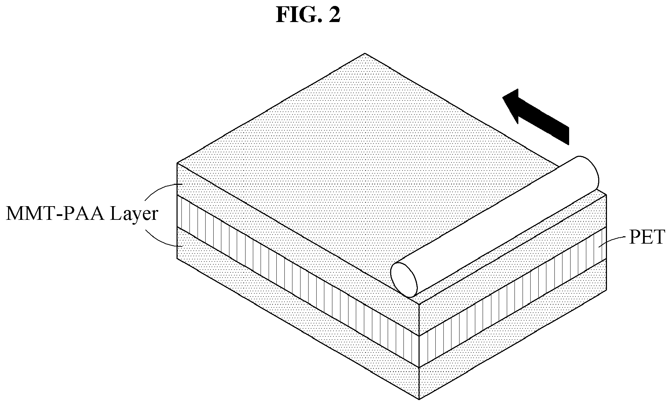

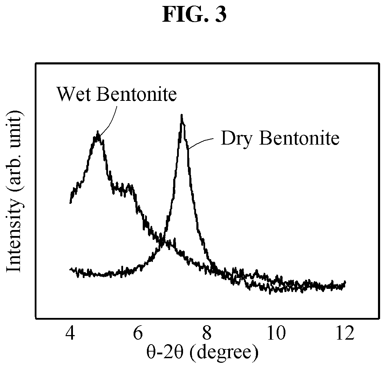

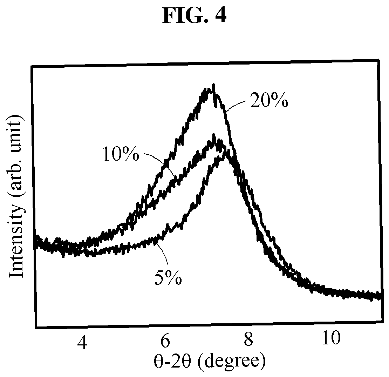

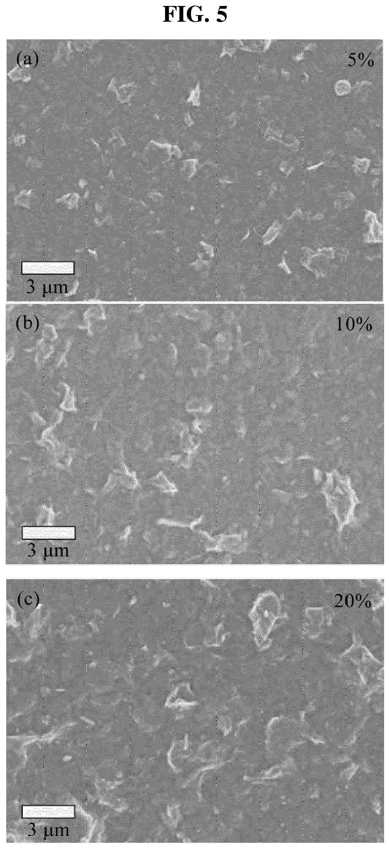

FIG. 1 is a diagram illustrating a process in which a nanocomposite is formed by mixing bentonite and poly(acrylic acid) (PAA) according to an example embodiment, and FIG. 2 is a diagram illustrating a process of coating a substrate with a coating agent composition according to an example embodiment. FIG. 3 is a graph illustrating an analysis result of an X-ray diffraction (XRD) of bentonite that is a component of a nanocomposite according to an example embodiment, and FIG. 4 is a graph illustrating an XRD analysis result of a coating layer formed through the process of FIG. 2. FIG. 5 illustrates field emission-scanning electron microscope (FE-SEM) images of the coating layer formed through the process of FIG. 2.

Hereinafter, example embodiments will be described with reference to FIGS. 1 through 5.

According to an example embodiment, a coating agent composition is provided. The coating agent composition includes a nanocomposite including nanoclay minerals and a polymer, and a solvent.

The nanocomposite may be prepared by mixing peeled nanoclay minerals and a polymer. In the coating agent composition, a weight ratio of the nanoclay minerals and the polymer may range from 1 : 1: to 1: 2. The nanocomposite may be included in an amount of 0.1 % by weight (wt %) to 20 wt % based on 100 wt % of the coating agent composition. Desirably, the nanocomposite may be included in an amount of 5 wt % to 10 wt % based on 100 wt % of the coating agent composition.

When the coating agent composition is used as a coating agent of a substrate of a package, the nanocomposite may perform a function of suppressing permeation of gas molecules, such as oxygen or water vapor, which invade from the outside of the package. For example, the nanocomposite may function as a barrier to increase a diffusion path of gas molecules by bypassing a flow path of the gas molecules.

The nanoclay minerals may include plate-shaped nanoparticles. For example, the nanoclay minerals may include particles with a size of 0.8 nanometers (nm) to 1.2 nm. The nanoclay minerals may be bentonite. The bentonite may be, for example, sodium bentonite. The bentonite is clay minerals including fine particles, and corresponds to a hydrated aluminum silicate containing a small amount of alkali and alkaline earth metals. The bentonite forms a layer structure by binding two tetrahedral structural units and one octahedral structural unit that are skeletal structures of silicate minerals. Due to a considerable weak interlayer bonding between the tetrahedral structural units, the bentonite has a structural characteristic that water (H₂O), organic ions, or molecules are easily interposed between structural units. Due to the structural characteristic, a significant expansion characteristic may occur when water is absorbed. For example, when water is absorbed, a volume of bentonite may be expanded about 5 times to about 20 times based on dry bentonite.

The polymer may perform a function of increasing a diffusion path of gas molecules. The polymer may include, for example, poly(acrylic acid) (PAA), or poly(methacrylic acid) (PMA). The PAA may be expressed by Formula 1 shown below.

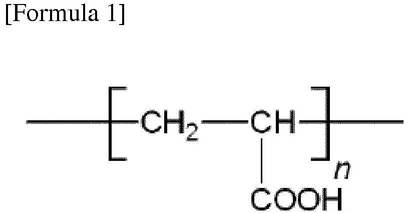

In Formula 1, n is an integer greater than or equal to "1000". Desirably, n may be an integer greater than or equal to "1100". More desirably, n may be an integer between "1200" and "3000".

The PAA may have a negative charge when the PAA is dissolved in a solvent, for example, water. Since polymer chains with negative charges tend to move away from each other, a long polymer chain structure may be formed. In other words, when PAA is dissolved in water, the PAA may have a structure of unaggregated chains.

The solvent may be used to dissolve PAA and bentonite. The solvent may include, for example, at least one of deionized water, methanol, ethanol and butanol.

For example, when PAA and bentonite are mixed in the solvent, polymer chains of the PAA may be disposed between layers formed by the bentonite, so that a nanocomposite may be formed, as shown in FIG. 1.

The coating agent composition including the nanocomposite may absorb water vapor through bentonite, to perform a barrier function to prevent water vapor from penetrating through the nanocomposite. The nanocomposite may increase a diffusion path of gas molecules using polymer chains of PAA, to perform a barrier function to prevent gas molecules, such as oxygen, from penetrating through the nanocomposite.

The coating agent composition may be used for a packaging film of a package. The coating agent composition may perform a function of a barrier to prevent gas molecules from flowing into the package from the outside of the package, by coating the package with the packaging film. In particular, when the coating agent composition is used for a package for food storage, the coating agent composition may prevent food within the package from spoiling by suppressing penetration of oxygen or water vapor into the package. For example, the coating agent composition may have an oxygen transmission rate (OTR) of 0.5 cc/m²·day to 10 cc/m²·day and a water vapor transmission rate (WVTR) of 10 g/m²·day to 20 g/m²·day.

Since the coating agent composition includes nanoscale particles, a visibility of a transparent packaging film may be ensured even though the transparent packaging film is coated with the coating agent composition.

According to an example embodiment, a method of preparing the above-described coating agent composition is provided. The method may include mixing nanoclay minerals and a polymer in a solvent to prepare a mixed solution, dispersing the mixed solution so that the polymer is dispersed between the nanoclay minerals to prepare a dispersion solution in which a nanocomposite is formed, centrifuging and purifying the dispersion solution to prepare a suspension, and removing precipitates from the suspension to prepare a coating solution.

To prepare the mixed solution, the nanoclay minerals and the polymer may be dissolved and mixed in the solvent. For example, bentonite and PAA may be used as nanoclay minerals and PAA, respectively. In the mixed solution, a weight ratio of the nanoclay minerals and the polymer may range from 1 : 1 to 1 : 2.

To prepare the dispersion solution in which the nanocomposite is formed, the mixed solution may be dispersed so that the polymer may be dispersed between the nanoclay minerals. For example, a nanocomposite in which an anionic chain type polymer is located between layers formed by the nanoclay minerals may be formed.

To prepare the suspension, the dispersion solution may be centrifuged to separate impurities from the nanocomposite. The suspension may be prepared by removing the impurities through a purification process.

To prepare the coating solution, precipitates may be removed from the suspension. The precipitates may include a particle with a greater size than that of the nanocomposite.

The nanocomposite may be included in an amount of 5 wt % to 10 wt % based on 100 wt % of the prepared coating solution.

Hereinafter, example embodiments will be described in detail with reference to the accompanying drawings. The scope of the right, however, should not be construed as limited to the example embodiments set forth herein. Various modifications may be made to the example embodiments. Here, the examples are not construed as limited to the disclosure and should be understood to include all changes, equivalents, and replacements within the idea and the technical scope of the disclosure.

The terminology used herein is for the purpose of describing particular embodiments only and is not intended to be limiting. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Regarding the reference numerals assigned to the elements in the drawings, it should be noted that the same elements will be designated by the same reference numerals, wherever possible, even though they are shown in different drawings. Also, in describing of example embodiments, detailed description of well-known related structures or functions will be omitted when it is deemed that such description will cause ambiguous interpretation of the present disclosure.

Throughout the present specification, the term "%" used to express the concentration of a specific material, unless otherwise particularly stated, refers to (wt/wt)% for solid/solid, (wt/vol)% for solid/liquid, and (vol/vol)% for liquid/liquid.

### Used Materials

The following materials were used:
Poly(acrylic acid) (PAA, Average M_{w} 100,000, purchased from Sigma-Aldrich); and
Bentonite, sodium form (purchased from Alfa Aesar)

The above materials were used without an additional purification process.

A special Reagent for analysis was used as a solvent such as ethanol. distilled water was purified by a Milli-Q system, to be used

Preparation Example 1: Preparation of Coating Agent including Nanocomposite 1 g of bentonite and 2 g of PAA were dissolved in water to prepare 50 ml of a mixed solution. The mixed solution was dispersed by ultrasonication, to prepare a dispersion solution including a nanocomposite in which PAA is dispersed between bentonite.

The dispersion by ultrasonication was performed for 20 minutes under 70 duty and 5 output power.

25 ml of the dispersion solution was added to a conical tube, and 25 ml of ethanol was added thereto to prepare 50 ml of a mixed solution. The mixed solution was centrifuged at 7,000 RPM (ACC 5, DEC 5) for 5 minutes using a centrifuge. 15 ml of water was added to a gel obtained by removing a transparent supernatant from the centrifuged solution, to prepare 25 ml of a solution. 25 ml of the prepared solution was shaken to prepare a suspension.

Next, a precipitate sank to the bottom of the suspension was removed, to prepare a coating agent.

In the prepared coating agent, 5 wt % of the nanocomposite was included. A coating agent including 10 wt % of the nanocomposite and a coating agent including 20 wt % of the nanocomposite were prepared in the same manner as described above.

To prepare the coating agent including 10 wt % of the nanocomposite, 2 g of bentonite and 4 g of PAA were used. To prepare the coating agent including 20 wt % of the nanocomposite, 4 g of bentonite and 8 g of PAA were used.

Preparation Example 2: Preparation of Packaging Film using Coating Agent of Preparation Example 1

As a substrate of a packaging film, a polyethylene terephthalate (PET) film was used. A PET film with 10 × 10 cm² was put into isopropyl alcohol, and cleaned with ultrasonic waves for 10 minutes. The cleaned PET substrate was fixed on a hot plate preheated to 80°C. The coating agent of Preparation Example 1 was applied onto the PET film using a casting rod as shown in FIG. 2, at a speed of 20 mm/s.

The coating agent of Preparation Example 1 was applied onto a side opposite to the PET film in the same manner, to prepare a packaging film having a bilayer structure.

The coating agent including 5 wt % of the nanocomposite, the coating agent including 10 wt % of the nanocomposite, and the coating agent including 20 wt % of the nanocomposite were individually applied onto the PET film, to prepare three types of packaging films.

### Experimental Example 1: Analysis of Diffraction Pattern of Bentonite

To confirm a structural change of bentonite based on environmental conditions due to a change in humidity, diffraction data of bentonite was analyzed. A grazing incidence X-ray diffraction (GIRXD) pattern of bentonite was analyzed, and X'Pert Pro (PANalytical, 49 kev, 40 mA, Netherlands) was used as equipment for GIRXD.

A diffraction pattern of bentonite in a dry state (hereinafter, referred to as "dry bentonite"), and a diffraction pattern of bentonite (hereinafter, referred to as "wet bentonite") prepared by adding distilled water were confirmed under the same treatment conditions. The diffraction patterns are shown in FIG. 3.

It is confirmed that the diffraction pattern of the dry bentonite has a sharp peak at 2θ = 7.24°. Also, it is confirmed that an interval between layers forming the dry bentonite is 1.22 nm.

It is confirmed that the diffraction pattern of the wet bentonite has a sharp peak at 2θ = 4.79°. Also, it is confirmed that an interval between layers forming the wet bentonite is 1.86 nm.

As shown in the diffraction patterns, a structure of bentonite is confirmed to change based on whether bentonite contains water. It is configured that when water is added to bentonite, an intercalation phenomenon in which water is intercalated between three layers forming the bentonite occurs. Since an interval between the layers of the bentonite increases during the intercalation phenomenon, the bentonite may be understood to have a relatively high water absorption capacity.

Experimental Example 2: Analysis of Diffraction Patterns of Coating Agents applied onto Packaging Film of Preparation Example 2

A diffraction pattern of a coating agent applied onto the packaging film prepared in Preparation Example 2 was analyzed. A GIRXD pattern of the coating agent was analyzed, and X'Pert Pro (PANalytical, 49 kev, 40 mA, Netherlands) was used as equipment for GIRXD.

A diffraction pattern of the coating agent including 5 wt % of the nanocomposite, a diffraction pattern of the coating agent including 10 wt % of the nanocomposite, and a diffraction pattern of the coating agent including 20 wt % of the nanocomposite were analyzed, and were confirmed under the same treatment conditions. The diffraction patterns are shown in FIG. 4.

It is confirmed that the diffraction patterns of the above three coating agents have similar peaks and similar peak widths. It is confirmed that the diffraction pattern of the coating agent including 5 wt % of the nanocomposite has a peak at 2θ = 7.51°, that diffraction pattern of the coating agent including 10 wt % of the nanocomposite has a peak at 2θ = 7.17°, and that diffraction pattern of the coating agent including 10 wt % of the nanocomposite has a peak at 2θ = 7.07°.

It is confirmed based on experimental results that the diffraction patterns of the coating agents are similar to a diffraction pattern of bentonite, and thus it may be seen that a crystal structure of bentonite may be maintained even in the coating agents.

Experimental Example 3: Analysis of Crystal Structures of Coating Agents of Preparation Example 2

FE-SEM images of the coating agents applied onto the packaging film prepared in Preparation Example 2 were confirmed. The FE-SEM images were acquired using SIGMA equipment (Carl Zeiss, Germany), under a condition of an acceleration voltage of 5 keV. The acquired FE-SEM images are shown in FIG. 5.

As shown in FIG. 5, it is confirmed that the coating agents have a structure of unaligned crystals. Due to the unaligned crystals, gas molecules, such as oxygen or water vapor, may be diffused in a complex manner, and an effect of inhibiting invasion of the gas molecules may be generated.

Also, it is confirmed that the coating agents have relatively low opacities due to having small-sized crystals. Thus, a visibility may be ensured even though a package is coated with the coating agents.

Experimental Example 4: Confirmation of OTR of Packaging Film of Preparation Example 2

OTRs of coating agents applied onto the packaging film prepared in Preparation Example 2 were measured. The OTRs were measured using OX-TRAN2/21 and PERMATRAN-W3/33 (MOCON, U.S.A.).

Measurement results are shown in Table 1 below.

**[Table 1]**

| SAMPLE | OTR (cc/m²·day) |
|---|---|
| Coating agent including 5 wt % of nanocomposite | 0.860208 |
| Coating agent including 10 wt % of nanocomposite | 7.546055 |
| Coating agent including 20 wt % of nanocomposite | 153.3303 |

It is confirmed that the OTRs of the prepared coating agents are sufficiently low. In particular, it is confirmed that when the amount of the nanocomposite in the coating agent is 10 wt %, the coating agent has an OTR of 7.54 to perform a sufficient barrier function against oxygen.

Experimental Example 5: Confirmation of WVTR of Packaging Film of Preparation Example 2

WVTRs of coating agents applied onto the packaging film prepared in Preparation Example 2 were measured. The WVTRs were measured using OX-TRAN2/21 and PERMATRAN-W3/33 (MOCON, U.S.A.).

Measurement results are shown in Table 2 below.

**[Table 2]**

| SAMPLE | WVTR (g/m²·day) |
|---|---|
| Coating agent including 5 wt % of nanocomposite | 19.93913 |
| Coating agent including 10 wt % of nanocomposite | 19.18289 |
| Coating agent including 20 wt % of nanocomposite | 40.28972 |

It is confirmed that the WVTRs of the prepared coating agents are sufficiently low. In particular, it is confirmed that the WVTRs of the coating agents including 10 wt % or less of the nanocomposite have similar values regardless of concentrations. Also, it is confirmed that the WVTR of the coating agent including 20 wt % of the nanocomposite rapidly decreases, which leads to a reduction in a performance.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A coating agent composition comprising:
a nanocomposite including nanoclay minerals and a polymer; and
a solvent.

2. The coating agent composition of claim 1, wherein the nanoclay minerals comprise plate-shaped nanoparticles with a size of 0.8 nanometers (nm) to 1.2 nm.

3. The coating agent composition of claim 1, wherein
the nanoclay minerals are bentonite, and
the polymer is poly(acrylic acid) (PAA).

4. The coating agent composition of claim 1, wherein a weight ratio of the nanoclay minerals and the polymer ranges from 1 : 1: to 1: 2.

5. The coating agent composition of claim 1, wherein the nanocomposite is included in an amount of 0.1 % by weight (wt %) to 20 wt % based on 100 wt % of the coating agent composition.

6. The coating agent composition of claim 4, wherein the nanocomposite is included in an amount of 5 wt % to 10 wt % based on 100 wt % of the coating agent composition.

7. The coating agent composition of claim 1, wherein the coating agent composition has an oxygen transmission rate (OTR) of 0.5 cc/m²·day to 10 cc/m²·day, and water vapor transmission rate (WVTR) of 10 g/m²·day to 20 g/m²·day.

8. The coating agent composition of claim 1, wherein the solvent is at least one selected from the group consisting of deionized water, methanol, ethanol and butanol.

9. A method of preparing a coating agent composition, the method comprising:
mixing nanoclay minerals and a polymer in a solvent to prepare a mixed solution;
dispersing the mixed solution so that the polymer is dispersed between the nanoclay minerals to prepare a dispersion solution in which a nanocomposite is formed; and
centrifuging and purifying the dispersion solution to prepare a suspension.

10. The method of claim 9, wherein
the nanoclay minerals are bentonite, and
the polymer is poly(acrylic acid) (PAA).

11. The method of claim 10, wherein a weight ratio of the nanoclay minerals and the polymer ranges from 1 : 1: to 1: 2 in the mixed solution.

12. The method of claim 9, further comprising:
removing precipitates from the suspension to prepare a coating solution.

13. The method of claim 12, wherein the nanocomposite is included in an amount of 5 % by weight (wt %) to 10 wt % based on 100 wt % of the coating solution.
